# EUROPEAN PATENT APPLICATION

(11) **EP 3 515 140 A1**
(43) Date of publication of application: **24.07.2019**
(21) Application number: 17854623.0
(22) Date of filing: 29.08.2017
(51) Int. Cl.: H04W 72/04, H04W 72/12

(54) **METHOD, DEVICE AND SYSTEM FOR TRANSMITTING RESPONSE INFORMATION**

(30) Priority: 30.09.2016 CN 201610871246
(71) Applicant: Huawei Technologies Co., Ltd., Longgang District Shenzhen, Guangdong 518129 (CN)
(72) Inventor: XIANG, Zhengzheng, Shenzhen Guangdong 518129 (CN); PANG, Jiyong, Shenzhen Guangdong 518129 (CN)
(74) Representative: Epping - Hermann - Fischer
(86) International application number: PCT/CN2017/099477
(87) International publication number: WO 2018/059171

(57) **Abstract**

This application discloses a response information transmission method, device, and system, and pertains to the field of wireless communications technologies. The method includes: generating, by a radio access point, a first downlink subframe, where DCI included in the first downlink subframe carries first duration; in a process of occupying a target channel, sending, by the radio access point, the first downlink subframe to UE; and replying with, by the UE after the first duration when the first downlink subframe is received, response information corresponding to n temporally consecutive downlink subframes that include the first downlink subframe and that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

## Description

This application claims priority to Chinese Patent Application No. 201610871246.5, filed with the Chinese Patent Office on September 30, 2016 and entitled "RESPONSE INFORMATION TRANSMISSION METHOD, DEVICE, AND SYSTEM", which is incorporated herein by reference in its entirety.

### TECHNICAL FIELD

This application relates to the field of wireless communications technologies, and in particular, to a response information transmission method, device, and system.

### BACKGROUND

In the wireless communications field, after a transmit end sends data to a receive end, the receive end needs to reply with response information, to notify the transmit end whether the data is correctly received. In actual application, the response information may be acknowledgement/negative acknowledgement (English: Acknowledgement/Negative Acknowledgement, ACK/NACK for short) information.

For a communications system working on a licensed spectrum, the receive end may reply with the response information after fixed duration since the data is received. For example, in a Long Term Evolution (English: Long Term Evolution, LTE for short) system, user equipment (English: User Equipment, UE for short) always replies with the response information four milliseconds later after downlink data is received. However, with development of wireless communications technologies, more communications systems, for example, a licensed-assisted access (English: License Assisted Access, LAA for short) system, work on an unlicensed spectrum. A plurality of communications systems may work on the unlicensed spectrum, and therefore, a listen before talk (English: Listen Before Talk, LBT for short) mechanism is usually used for communication on the unlicensed spectrum in consideration of spectrum contention and fairness between the plurality of communications systems. In other words, a device first senses a channel before sending data, and the device can access the channel to send the data when sensing that the channel is idle. Further, duration of the device for occupying a channel cannot exceed a maximum channel occupancy time (English: Maximum Channel Occupancy Time, MCOT for short). When the duration of the device for occupying the channel exceeds the MCOT, the device needs to perform LBT again to contend for a channel. Generally duration of the MCOT is not fixed, and in addition, duration of downlink subframes of the plurality of communications systems that work on the unlicensed spectrum is inconsistent. Therefore, a manner in the licensed spectrum in which the receive end replies with the response information after the fixed duration when the data is received is not applicable to the unlicensed spectrum.

In the related technology, for communication on the unlicensed spectrum, a radio access point such as a base station may send control signaling to UE. After receiving the control signaling, the UE sends, to the radio access point, response information corresponding to all downlink subframes in a preset time window, where all the downlink subframes in the preset window include a downlink subframe that can be received by the UE but is not sent to the UE.

Generally the duration of the downlink subframes of the plurality of communications systems that work on the unlicensed spectrum is inconsistent. Therefore, in the prior art, the UE needs to correctly identify a type of each downlink subframe and duration corresponding to each downlink subframe in the preset time window, so as to determine a quantity of downlink subframes in the preset time window. This undoubtedly significantly increases processing complexity of the UE. In addition, the UE further needs to reply with response information corresponding to a downlink subframe that is not sent to the UE, causing a waste of network resources.

### SUMMARY

To resolve prior-art problems of relatively large UE processing complexity and a network resource waste, this application provides a response information transmission method, device, and system. The technical solutions are as follows.

According to a first aspect, a response information transmission method is provided and is applied to user equipment UE, where the method includes:
receiving a first downlink subframe sent by a radio access point through a target channel, where the first downlink subframe includes downlink control signaling DCI and downlink data, the DCI carries first duration, the DCI is used to instruct to schedule n temporally consecutive downlink subframes that include the first downlink subframe and that are sent to the UE, and n is a positive integer greater than or equal to 1; and
sending, in m uplink subframes through the target channel after the first duration carried in the DCI included in the first downlink subframe, response information corresponding to the n downlink subframes to the radio access point, where m is a positive integer greater than or equal to 1 and less than or equal to n.

In the technical solutions in this application, the UE may receive the first downlink subframe that is sent by the radio access point through the target channel, where downlink control signaling (English: Downlink Control Information, DCI for short) included in the first downlink subframe carries first duration; and after the first duration when the first downlink subframe is received, the UE may reply with response information corresponding to n temporally consecutive downlink subframes that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

The first duration is an integral multiple of duration of a shortest downlink subframe in downlink subframes that can be sent by the radio access point.

In different implementations, the radio access point can send a plurality of different types of downlink subframes, and the different types of downlink subframes may have different duration. Therefore, when the radio access point may send downlink subframes having different duration, the first duration carried in the DCI included in the first downlink subframe may be an integral multiple of the duration of the shortest downlink subframe in the downlink subframes that can be sent by the radio access point.

In addition, duration of each of the m uplink subframes is less than or equal to duration of any one of the n downlink subframes.

In a possible design, when m is equal to 1, a technical process of the sending, in m uplink subframes through the target channel, response information corresponding to the n downlink subframes to the radio access point may include: sending, in one uplink subframe through the target channel, the response information corresponding to the n downlink subframes to the radio access point.

In another possible design, when m is equal to n, a technical process of the sending, in m uplink subframes through the target channel, response information corresponding to the n downlink subframes to the radio access point may include: sequentially sending, in n temporally consecutive uplink subframes through the target channel, the response information corresponding to the n downlink subframes to the radio access point.

In this application, the DCI further carries listen before talk LBT instruction information, the LBT instruction information is used to instruct the UE to perform a long LBT operation, a short LBT operation, or no LBT operation. In this case, a technical process of the sending, in m uplink subframes through the target channel after the first duration carried in the DCI included in the first downlink subframe, response information corresponding to the n downlink subframes to the radio access point may include: performing, after the first duration carried in the DCI included in the first downlink subframe, an LBT operation based on the LBT instruction information carried in the DCI; and sending, in the m uplink subframes through the target channel after the UE accesses the target channel by using the LBT operation, the response information corresponding to the n downlink subframes to the radio access point.

As described above, an LBT mechanism is usually used on a communications system working on an unlicensed spectrum for communication. Therefore, when sending the response information to the radio access point through the target channel, the UE needs to perform the LBT operation. However, in some cases, a time at which the radio access point instructs the UE to send the response information is in an MCOT for which the radio access point currently occupies the target channel. In this case, the LBT instruction information carried in the DCI in the first downlink subframe sent by the radio access point may instruct the UE to perform the short LBT operation, or perform no LBT operation, so as to improve a probability of the UE of successfully accessing the channel. However, in some other cases, a time at which the radio access point instructs the UE to send the response information is outside an MCOT for which the radio access point currently occupies the target channel. In this case, the LBT instruction information carried in the DCI in the first downlink subframe sent by the radio access point may instruct the UE to perform the long LBT operation, so as to avoid a conflict between the sending the response information by the UE and communication of another communications system.

According to a second aspect, this application provides a response information transmission method, applied to a radio access point, where the method includes:
generating a first downlink subframe, where the first downlink subframe includes downlink control signaling DCI and downlink data, the DCI carries first duration, the DCI is used to instruct to schedule n temporally consecutive downlink subframes that include the first downlink subframe and that are sent to user equipment UE, and n is a positive integer greater than or equal to 1;
in a process of occupying a target channel, sending the first downlink subframe to the UE through the target channel, so that the UE sends, in m uplink subframes through the target channel after the first duration carried in the DCI included in the first downlink subframe when the first downlink subframe is received, response information corresponding to the n downlink subframes to the radio access point, where m is a positive integer greater than or equal to 1 and less than or equal to n; and
receiving, in the m uplink subframes, the response information corresponding to the n downlink subframes sent by the UE.

In the technical solutions in this application, the radio access point may send the first downlink subframe to the UE through the target channel, where the DCI included in the first downlink subframe carries the first duration, so that after the first duration when the first downlink subframe is received, the UE may reply with the response information corresponding to the n temporally consecutive downlink subframes that include the first downlink subframe and that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

The first duration is an integral multiple of duration of a shortest downlink subframe in downlink subframes that can be sent by the radio access point.

In addition, duration of each of the m uplink subframes is less than or equal to duration of any one of the n downlink subframes.

In a possible design, when m is equal to 1, a technical process of the receiving, in the m uplink subframes, the response information corresponding to the n downlink subframes sent by the UE may include: receiving, in one uplink subframe, the response information corresponding to the n downlink subframes sent by the UE.

In another possible design, when m is equal to n, a technical process of the receiving, in the m uplink subframes, the response information corresponding to the n downlink subframes sent by the UE may include: sequentially receiving, in n temporally consecutive uplink subframes, the response information corresponding to the n downlink subframes sent by the UE.

In this application, a technical process of the generating a first downlink subframe may include: determining, within a maximum channel occupancy time MCOT for which the radio access point currently occupies the target channel, a sending moment at which the radio access point is to send the first downlink subframe; determining, based on the sending moment, the first duration, and duration of the MCOT, whether a moment at which the UE sends the response information through the target channel is in the MCOT; when it is determined that the moment at which the UE sends the response information through the target channel is in the MCOT, generating a first downlink subframe that includes first DCI or generating a first downlink subframe that includes second DCI, where the first DCI carries LBT instruction information that is used to instruct the UE to perform a short listen before talk LBT operation, and the second DCI carries LBT instruction information that is used to instruct the UE to perform no LBT operation; and when it is determined that the moment at which the UE sends the response information through the target channel is outside the MCOT, generating a first downlink subframe that includes third DCI, where the third DCI carries LBT instruction information that is used to instruct the UE to perform a long LBT operation.

When the radio access point determines that the moment at which the UE sends the response information through the target channel is in the MCOT, the radio access point may generate the first downlink subframe that includes the first DCI or the second DCI, so as to instruct the UE to perform the short LBT operation or perform no LBT operation, and improve a probability of the UE of successfully accessing the channel. When the radio access point determines that the moment at which the UE sends the response information through the target channel is outside the MCOT, the radio access point may generate the first downlink subframe that includes the third DCI, so as to instruct the UE to perform the long LBT operation, and avoid a conflict between the sending the response information by the UE and communication of another communications system.

According to a third aspect, this application provides a response information transmission method, applied to user equipment UE, where the method includes:
receiving type information and duration information that are of each subframe to be scheduled by a radio access point within a first maximum channel occupancy time MCOT and that are sent by the radio access point, where the type information is used to indicate that a type of a subframe is a downlink subframe type or an uplink subframe type; and
sending, based on the type information, the duration information, and a preset subframe offset after receiving a subframe that is separated by at least the subframe offset from a downlink subframe sent by the radio access point to the UE within the first MCOT, response information corresponding to the downlink subframe in a subframe that is scheduled by the radio access point within the first MCOT and whose type information is the uplink subframe type.

In the technical solutions in this application, the UE may receive the type information and the duration information of each subframe to be scheduled by the radio access point within the first MCOT, and reply with the response information in an uplink subframe within the first MCOT based on the preset subframe offset after receiving the subframe that is separated by at least the subframe offset from the downlink subframe sent by the radio access point to the UE within the first MCOT. Therefore, when sending a downlink subframe within the first MCOT, the radio access point does not need to indicate a reply time offset of response information corresponding to the downlink subframe, namely, the first duration, so as to significantly reduce signaling overheads of the radio access point.

A length of a subframe that is scheduled by the radio access point within the first MCOT and whose subframe type is the downlink subframe type is greater than or equal to a length of a subframe whose subframe type is the uplink subframe type.

According to a fourth aspect, this application provides a response information transmission method, applied to a radio access point, where the method includes:
generating type information and duration information that are of each subframe to be scheduled by the radio access point within a first maximum channel occupancy time MCOT, where the type information is used to indicate that a type of a subframe is a downlink subframe type or an uplink subframe type; and
in a process of occupying a target channel, sending the type information and the duration information to user equipment UE through the target channel, so that the UE sends, based on the type information, the duration information, and a preset subframe offset after receiving a subframe that is separated by at least the subframe offset from a downlink subframe sent by the radio access point to the UE within the first MCOT, response information corresponding to the downlink subframe in a subframe that is scheduled by the radio access point within the first MCOT and whose type information is the uplink subframe type.

In the technical solutions in this application, the radio access point may generate and send, to the UE, the type information and the duration information of each subframe to be scheduled by the radio access point within the first MCOT, so that the UE replies with the response information in an uplink subframe within the first MCOT based on the preset subframe offset, the type information, and the duration information after receiving the subframe that is separated by at least the subframe offset from the downlink subframe sent by the radio access point to the UE within the first MCOT. Therefore, when sending a downlink subframe within the first MCOT, the radio access point does not need to indicate a reply time offset of response information corresponding to the downlink subframe, namely, the first duration, so as to significantly reduce signaling overheads of the radio access point.

A length of a subframe that is scheduled by the radio access point within the first MCOT and whose subframe type is the downlink subframe type is greater than or equal to a length of a subframe whose subframe type is the uplink subframe type.

According to a fifth aspect, this application provides a response information transmission device. The response information transmission device includes at least one module, and the at least one module is configured to implement the response information transmission method provided in the first aspect or any implementation of the first aspect.

According to a sixth aspect, this application provides a response information transmission device. The response information transmission device includes at least one module, and the at least one module is configured to implement the response information transmission method provided in the second aspect or any implementation of the second aspect.

According to a seventh aspect, this application provides a response information transmission device. The response information transmission device includes at least one module, and the at least one module is configured to implement the response information transmission method provided in the third aspect or any implementation of the third aspect.

According to an eighth aspect, this application provides a response information transmission device. The response information transmission device includes at least one module, and the at least one module is configured to implement the response information transmission method provided in the fourth aspect or any implementation of the fourth aspect.

According to a ninth aspect, this application provides a response information transmission system. The response information transmission system includes the transmission device provided in the fifth aspect and the transmission device provided in the sixth aspect.

According to a tenth aspect, this application provides a response information transmission system. The response information transmission system includes the transmission device provided in the seventh aspect and the transmission device provided in the eighth aspect.

According to an eleventh aspect, this application provides a transmission device. The transmission device includes a processor, a transmitter, a receiver, and a memory. The transmitter, the receiver, and the memory are separately connected to the processor. The processor is configured to execute an instruction stored in the memory, and the processor implements, by executing the instruction, the response information transmission method provided in the first aspect or any possible implementation of the first aspect.

According to a twelfth aspect, this application provides a transmission device. The transmission device includes a processor, a transmitter, a receiver, and a memory. The transmitter, the receiver, and the memory are separately connected to the processor. The processor is configured to execute an instruction stored in the memory, and the processor implements, by executing the instruction, the response information transmission method provided in the second aspect or any possible implementation of the second aspect.

According to a thirteenth aspect, this application provides a transmission device. The transmission device includes a processor, a transmitter, a receiver, and a memory. The transmitter, the receiver, and the memory are separately connected to the processor. The processor is configured to execute an instruction stored in the memory, and the processor implements, by executing the instruction, the response information transmission method provided in the third aspect or any possible implementation of the third aspect.

According to a fourteenth aspect, this application provides a transmission device. The transmission device includes a processor, a transmitter, a receiver, and a memory. The transmitter, the receiver, and the memory are separately connected to the processor. The processor is configured to execute an instruction stored in the memory, and the processor implements, by executing the instruction, the response information transmission method provided in the fourth aspect or any possible implementation of the fourth aspect.

Beneficial effects of the technical solutions provided in this application are as follows:

A radio access point may generate a first downlink subframe, where DCI included in the first downlink subframe carries first duration; then the radio access point may send the first downlink subframe to UE through a target channel; and after the first duration when the first downlink subframe is received, the UE may reply with response information corresponding to n temporally consecutive downlink subframes that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

### BRIEF DESCRIPTION OF DRAWINGS

FIG. 1 is a schematic diagram of a device connection manner in a communications system working on an unlicensed spectrum according to an embodiment of the present invention;
FIG. 2 is a schematic structural diagram of UE 101 according to an embodiment of the present invention;
FIG. 3 is a schematic structural diagram of a radio access point 102 according to an embodiment of the present invention;
FIG. 4 is a flowchart of a response information transmission method according to an embodiment of the present invention;
FIG. 5 is a schematic structural diagram of a downlink sub frame according to an embodiment of the present invention;
FIG. 6 is a schematic diagram in which UE sends response information according to an embodiment of the present invention;
FIG. 7 is a schematic diagram in which UE sends response information according to an embodiment of the present invention;
FIG. 8 is a schematic diagram in which UE sends response information according to an embodiment of the present invention;
FIG. 9 is a schematic diagram of a downlink subframe and an uplink subframe within an MCOT according to an embodiment of the present invention;
FIG. 10 is a flowchart of a response information transmission method according to an embodiment of the present invention;
FIG. 11 is a schematic diagram in which UE sends response information according to an embodiment of the present invention;
FIG. 12 is a schematic structural diagram of a response information transmission device 120 according to an embodiment of the present invention;
FIG. 13 is a schematic structural diagram of a response information transmission device 130 according to an embodiment of the present invention;
FIG. 14 is a schematic structural diagram of a response information transmission device 140 according to an embodiment of the present invention;
FIG. 15 is a schematic structural diagram of a response information transmission device 150 according to an embodiment of the present invention;
FIG. 16 is a schematic structural diagram of a response information transmission system 160 according to an embodiment of the present invention; and
FIG. 17 is a schematic structural diagram of a response information transmission system 170 according to an embodiment of the present invention.

### DESCRIPTION OF EMBODIMENTS

To make the objectives, technical solutions, and advantages of this application clearer, the following further describes the implementations of this application in detail with reference to the accompanying drawings.

This application provides a response information transmission method that is applicable to a scenario in which a device in a communications system working on an unlicensed spectrum transmits response information. The following briefly describes a device connection manner in the communications system working on the unlicensed spectrum in this application.

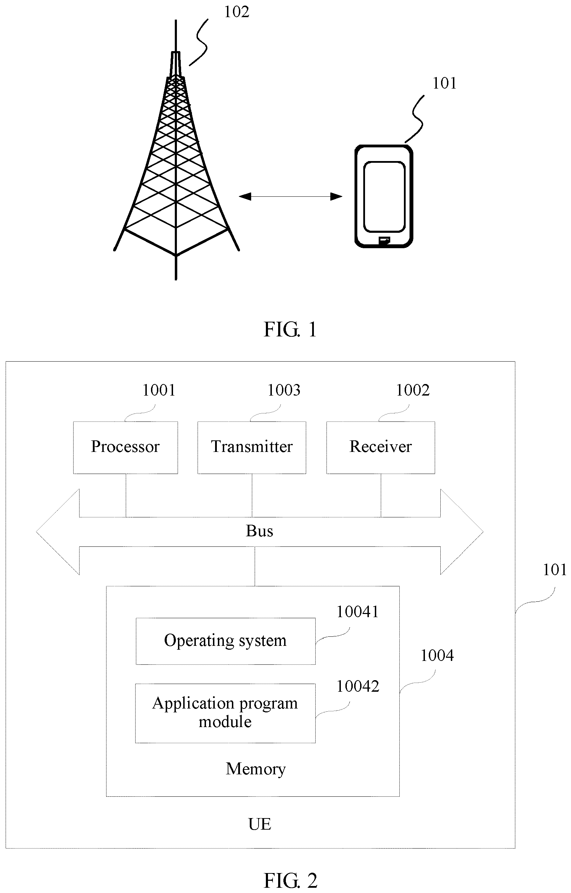

As shown in FIG. 1, the device in the communications system working on the unlicensed spectrum may include UE 101 and a radio access point 102. The radio access point may be a base station, a radio access point (English: Access Point, AP for short) in a wireless local area network, a small cell (English: small cell) in an LTE communications system, or the like. This is not specifically limited in this application. Data may be transmitted between the UE and the radio access point through a channel.

As shown in FIG. 2, in an embodiment of the present invention, the UE 101 may include a processor 1001, a receiver 1002, a transmitter 1003, and a memory 1004. The receiver 1002, the transmitter 1003, and the memory 1004 are separately connected to the processor 1001 by using a bus.

The processor 1001 includes one or more processing cores. The processor 1001 runs a software program and a module, to perform the response information transmission method provided in this application. The memory 1004 may be configured to store a software program and a module. Specifically, the memory 1004 may store an operating system 10041 and an application program module 10042 required for at least one function. The receiver 1002 is configured to receive a communication packet sent by another device, and the transmitter 1003 is configured to send a communication packet to another device.

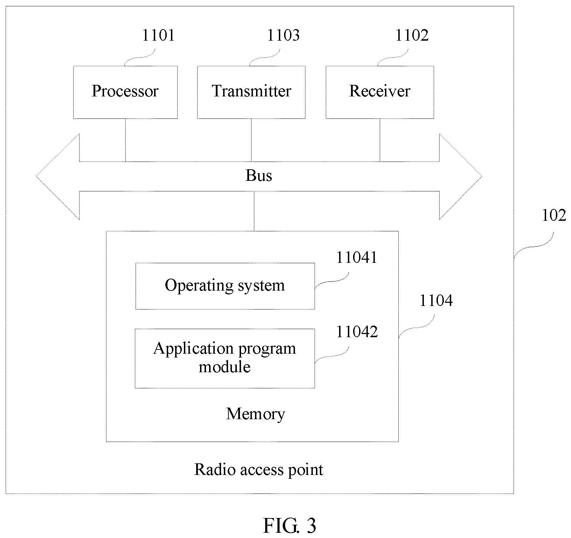

As shown in FIG. 3, in an embodiment of the present invention, the radio access point 102 may include a processor 1101, a receiver 1102, a transmitter 1103, and a memory 1104. The receiver 1102, the transmitter 1103, and the memory 1104 are separately connected to the processor 1101 by using a bus.

The processor 1101 includes one or more processing cores. The processor 1101 runs a software program and a module, to perform the response information transmission method provided in this application. The memory 1104 may be configured to store a software program and a module. Specifically, the memory 1104 may store an operating system 11041 and an application program module 11042 required for at least one function. The receiver 1102 is configured to receive a communication packet sent by another device, and the transmitter 1103 is configured to send a communication packet to another device.

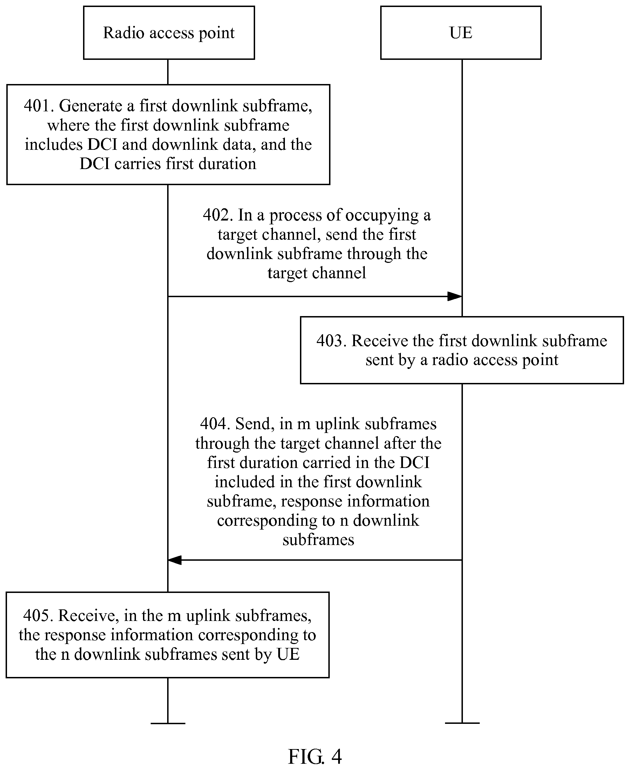

FIG. 4 is a flowchart of a response information transmission method according to an example embodiment. Referring to FIG. 4, the response information transmission method may be applied to a network architecture shown in FIG. 1, and the method includes the following steps.

Step 401: A radio access point generates a first downlink subframe, where the first downlink subframe includes downlink control signaling (English: Downlink Control Information, DCI for short) and downlink data, the DCI carries first duration, the DCI is used to instruct to schedule n temporally consecutive downlink subframes that include the first downlink subframe and that are sent to UE, and n is a positive integer greater than or equal to 1.

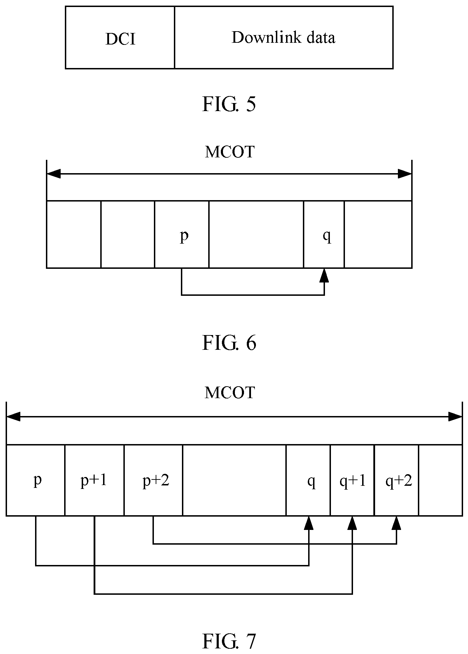

The radio access point further sends the DCI while sending the downlink data to the UE in a downlink subframe, and the DCI includes information required by the UE to decode the downlink data, such as resource allocation information, a modulation and decoding scheme, and a carrier indication, as shown in FIG. 5. When receiving the downlink subframe sent by the radio access point, the UE needs to first decode the DCI. If the UE can successfully decode the DCI, it indicates that the downlink subframe is sent to the UE. In this case, the UE may continue to decode the downlink data based on the decoded DCI. If the UE cannot successfully decode the DCI, it indicates that the downlink subframe is not sent to the UE. In addition, in some cases, DCI included in a downlink subframe may be used only to instruct to schedule the downlink subframe. In other cases, DCI included in a downlink subframe may be used to instruct to schedule not only the downlink subframe, but also other downlink subframes including the downlink subframe. For example, DCI included in a downlink subframe p may be used to instruct to schedule the downlink subframe p, a downlink subframe p+1, and a downlink subframe p+2. In this case, another downlink subframe that is instructed to be scheduled may not include DCI. In the foregoing example, the downlink subframe p+1 and the downlink subframe p+2 may not include DCI.

When generating the first downlink subframe, a radio access point in a communications system working on an unlicensed spectrum may also generate DCI. The generated DCI includes the information required by the UE to decode the downlink data, and may further carry the first duration, and the first duration is used to indicate duration between a moment at which the UE receives the first downlink subframe and a moment at which the UE sends, to the radio access point, the response information corresponding to a downlink subframe that is instructed to be scheduled by the DCI. Similar to the foregoing description, in some cases, the DCI in the first downlink subframe may be used only to instruct to schedule the first downlink subframe, and in this case, n in step 401 is equal to 1. In other cases, the DCI in the first downlink subframe may be used to instruct to schedule the n temporally consecutive downlink subframes that include the first downlink subframe and that are sent to the UE, and in this case, n in step 401 is a positive integer greater than 1.

For the foregoing first duration, it should be noted that in some embodiments of the present invention, the first duration is an integral multiple of duration of a shortest downlink subframe in downlink subframes that can be sent by the radio access point. In different implementations, the radio access point can send a plurality of different types of downlink subframes, and the different types of downlink subframes may have different duration. Therefore, the first duration carried in the DCI included in the first downlink subframe may be an integral multiple of the duration of the shortest downlink subframe in the downlink subframes that can be sent by the radio access point. For example, duration of downlink subframes that can be sent by the radio access point is respectively 0.25 millisecond, 0.5 millisecond, and 1 millisecond, and the first duration needs to be an integral multiple of 0.25 millisecond. Certainly, in some cases, the duration of the downlink subframes that can be sent by the radio access point is equal. In this case, it may be considered that the equal duration is the duration of the shortest downlink subframe in the downlink subframes that can be sent by the radio access point. For example, if the duration of the downlink subframes that can be sent by the radio access point is 1 millisecond, the first duration needs to be an integral multiple of 1 millisecond.

Further, the DCI in the first downlink subframe may include the information required by the UE to decode the downlink data and the first duration, and may further include LBT instruction information. To be specific, when generating the first downlink subframe, the radio access point may generate DCI including the LBT instruction information. The LBT instruction information is used to instruct the UE to perform a long LBT operation, a short LBT operation, or no LBT operation before sending the response information. The short LBT operation means sensing a target channel for a relatively short time, and the long LBT operation means sensing a target channel for a relatively long time and performing backoff. The UE may receive, within the MCOT for which the radio access point occupies the target channel, the first downlink subframe sent by the radio access point. However, because the first duration is between a moment at which the UE sends the response information to the radio access point and a moment at which the UE receives the first downlink subframe, the moment at which the UE sends the response information may be not in the MCOT for which the radio access point occupies the target channel. If the moment is not in the MCOT, the UE needs to perform the long LBT operation before sending the response information, and sends the response information in an uplink subframe only when sensing, by using the long LBT operation, that the target channel is idle; or if the moment is in the MCOT, the UE only needs to perform the short LBT operation or perform no LBT operation before sending the response information. The DCI carries the LBT instruction information, and therefore the UE does not need to perform the long LBT operation when the moment at which the UE sends the response information is in the MCOT, so as to save time, and simplify a response information sending procedure. A technical process in which the radio access point generates the DCI including the LBT instruction information may be as follows.
A. The radio access point determines, within the MCOT for which the radio access point currently occupies the target channel, a sending moment at which the radio access point is to send the first downlink subframe.
   For example, duration of the MCOT for which the radio access point currently occupies the target channel is 6 milliseconds, and the moment at which the radio access point is to send the first downlink subframe is at a third millisecond of the MCOT.
B. The radio access point determines, based on the sending moment, the first duration, and duration of the MCOT, whether a moment at which the UE sends the response information through the target channel is in the current MCOT.
   For example, the sending moment is at the third millisecond, and the duration of the MCOT is 6 milliseconds. If the first duration is 1 millisecond, the radio access point may determine that the moment at which the UE sends the response information through the target channel is in the MCOT; and if the first duration is 4 milliseconds, the radio access point may determine that the moment at which the UE sends the response information through the target channel is outside the MCOT.
C. When determining that the moment at which the UE sends the response information through the target channel is in the MCOT, the radio access point generates a first downlink subframe that includes first DCI or generates a first downlink subframe that includes second DCI, where the first DCI carries LBT instruction information that is used to instruct the UE to perform the short LBT operation, and the second DCI carries LBT instruction information that is used to instruct the UE to perform no LBT operation.
   As described above, if the moment at which the UE sends the response information through the target channel is in the MCOT, the radio access point needs to instruct the UE to perform the short LBT operation or perform no LBT operation before sending the response information. To be specific, the radio access point may generate the first downlink subframe that includes the first DCI or generate the first downlink subframe that includes the second DCI, where the first DCI carries the LBT instruction information that is used to instruct the UE to perform the short LBT operation, and the second DCI carries the LBT instruction information that is used to instruct the UE to perform no LBT operation.
D. When determining that the moment at which the UE sends the response information through the target channel is outside the MCOT, the radio access point generates a first downlink subframe that includes third DCI, where the third DCI carries LBT instruction information that is used to instruct the UE to perform the long LBT operation.

As described above, if the moment at which the UE sends the response information through the target channel is outside the MCOT, the radio access point needs to instruct the UE to perform the long LBT operation before sending the response information, to sense whether the target channel is idle. To be specific, the radio access point may generate the first downlink subframe that includes the third DCI, where the third DCI carries the LBT instruction information that is used to instruct the UE to perform the long LBT operation.

Step 402: In a process of occupying a target channel, the radio access point sends the first downlink subframe to the UE through the target channel.

The radio access point may send, within the MCOT for which the radio access point currently occupies the target channel, the first downlink subframe to the UE through the target channel.

Step 403: The UE receives the first downlink subframe sent by the radio access point.

Step 404: The UE sends, in m uplink subframes through the target channel after the first duration carried in the DCI included in the first downlink subframe, response information corresponding to the n downlink subframes to the radio access point, where m is a positive integer greater than or equal to 1 and less than or equal to n.

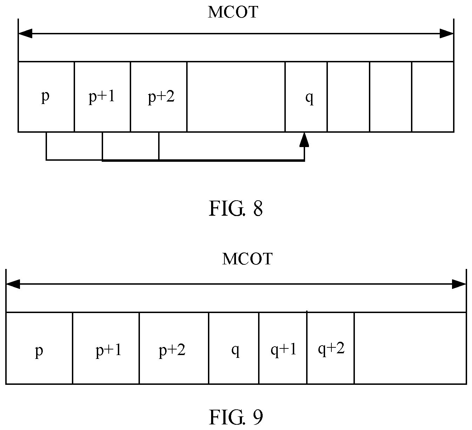

As described above, the first duration carried in the DCI included in the first downlink subframe is used to indicate the duration between the moment at which the UE receives the first downlink subframe and the moment at which the UE sends, to the radio access point, the response information corresponding to the downlink subframe that is instructed to be scheduled by the DCI. Therefore, the UE may send, in the uplink subframe after the first duration when the first downlink subframe is received, the response information to the radio access point based on the instruction of the DCI. It should be noted that based on a quantity of downlink subframes that are instructed to be scheduled by the DCI and a quantity of uplink subframes in which the UE replies with the response information, that the UE sends the response information to the radio access point may be classified into the following cases.
Case 1: n is equal to 1, and m is equal to 1. To be specific, the DCI in the first downlink subframe is used only to instruct to schedule the first downlink subframe. In this case, after the first duration when the first downlink subframe is received, the UE may send the response information to the radio access point in one uplink subframe through the target channel. As shown in FIG. 6, the UE sends, in an uplink subframe q after the first duration when a downlink subframe p is received, response information corresponding to the downlink subframe P.
Case 2: n is greater than 1, and m is equal to n. To be specific, the DCI in the first downlink subframe may be used to instruct to schedule the first downlink subframe, and may be further used to instruct to schedule other n-1 downlink sub frames, where the other n-1 downlink subframes and the first downlink subframe are temporally consecutive, and the UE may sequentially send, in the n temporally consecutive uplink subframes through the target channel after the first duration when the first downlink subframe is received, the response information corresponding to the n downlink subframes to the radio access point. For example, DCI included in the downlink subframe p may be used to instruct to schedule a downlink subframe p, a downlink subframe p+1, and a downlink subframe p+2. The downlink subframe p, the downlink subframe p+1, and the downlink subframe p+2 are temporally consecutive. After the first duration when the downlink subframe p is received, the UE may send, in an uplink subframe q, response information corresponding to the downlink subframe p to the radio access point; send, in an uplink subframe q+1, response information corresponding to the downlink subframe p+1 to the radio access point; and send, in an uplink subframe q+2, response information corresponding to the downlink subframe p+2 to the radio access point. The uplink subframe q, the uplink subframe q+1, and the uplink subframe q+2 are temporally consecutive, as shown in FIG. 7.
Case 3: n is greater than 1, and m is equal to 1. To be specific, the DCI in the first downlink subframe may be used to instruct to schedule the first downlink subframe, and may be further used to instruct to schedule other n-1 downlink subframes, where the other n-1 downlink subframes and the first downlink subframe are temporally consecutive, and the UE may send, in one uplink subframe through the target channel after the first duration when the first downlink subframe is received, the response information corresponding to the n downlink subframes to the radio access point. For example, DCI included in a downlink subframe p may be used to instruct to schedule the downlink subframe p, a downlink subframe p+1, and a downlink subframe p+2. The downlink subframe p, the downlink subframe p+1, and the downlink subframe p+2 are temporally consecutive. After the first duration when the downlink subframe p is received, the UE may send, in an uplink subframe q, the response information corresponding to the downlink subframe p, the downlink subframe p+1, and the downlink subframe p+2 to the radio access point, as shown in FIG. 8.
Case 4: n is greater than 1, and m is greater than 1 and less than n. The case is similar to Case 2, but a difference lies in that a downlink subframe and an uplink subframe are in a one-to-one correspondence in Case 2 whereas one uplink subframe may be corresponding to a plurality of downlink subframes in Case 4. To be specific, one downlink subframe includes response information corresponding to the plurality of downlink subframes.

It should be noted that in the foregoing four cases, after the first duration when the first downlink subframe is received, the UE may not immediately send response information, but may send the response information after a timeslot. In the timeslot, the UE may perform an uplink and downlink conversion operation, a carrier sensing operation, and the like. This is not specifically limited in this application.

It should be further noted that duration of each of the m uplink subframes is less than or equal to duration of any one of the n downlink subframes. In another implementation, to reduce duration occupied for sending the response information, duration of the uplink subframe may be less than or equal to duration of the downlink subframe. As shown in FIG. 9, within the MCOT for which the radio access point currently occupies the target channel, duration of the uplink subframe q, duration of the uplink subframe q+1, and duration of the uplink subframe q+2 are respectively less than duration of the downlink subframe p, duration of the downlink subframe p+1, and duration of the downlink subframe p+2.

In addition, as described above, when generating the first downlink subframe, the radio access point may generate the DCI that carries the LBT instruction information, and when the DCI included in the first downlink subframe carries the LBT instruction information, the foregoing step 404 may specifically include the following technical process.
A. After the first duration carried in the DCI included in the first downlink subframe, the UE performs an LBT operation based on the LBT instruction information carried in the DCI.
   If the DCI included in the first downlink subframe is the first DCI, the UE performs the short LBT operation; if the DCI included in the first downlink subframe is the second DCI, the UE performs no LBT operation; or if the DCI included in the first downlink subframe is the third DCI, the UE performs the long LBT operation.
B. The UE sends, in the m uplink subframes through the target channel after the UE accesses the target channel by using the LBT operation, the response information corresponding to the n downlink subframes to the radio access point.

Step 405: The radio access point receives, in the m uplink subframes, the response information corresponding to the n downlink subframes sent by the UE.

In conclusion, according to the response information transmission method provided in this embodiment of the present invention, the radio access point may generate the first downlink subframe, where the DCI included in the first downlink subframe carries the first duration; then the radio access point may send the first downlink subframe to the UE through the target channel; and after the first duration when the first downlink subframe is received, the UE may reply with the response information corresponding to the n temporally consecutive downlink subframes that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

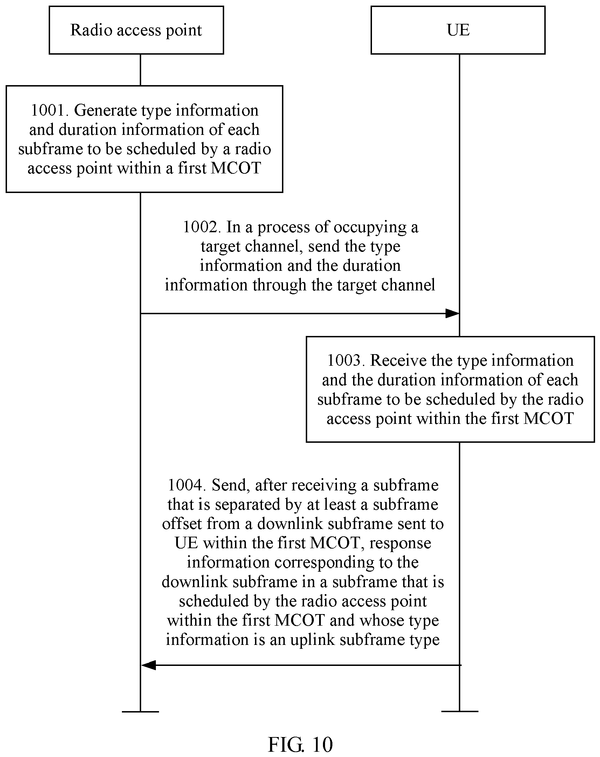

FIG. 10 is a flowchart of a response information transmission method according to an example embodiment. Referring to FIG. 10, the response information transmission method may be applied to a network architecture shown in FIG. 1, and the method includes the following steps.

Step 1001: A radio access point generates type information and duration information of each subframe to be scheduled by the radio access point within a first MCOT, where the type information is used to indicate that a type of a subframe is a downlink subframe type or an uplink subframe type.

A radio access point in a communications system working on an unlicensed spectrum may predetermine, within an MCOT, a quantity of downlink subframes or uplink subframes to be scheduled and duration of each downlink subframe and uplink subframe. After accessing a target channel by using an LBT operation, the radio access point may generate, in a bitmap (English: bitmap) manner, the type information of each subframe to be scheduled by the radio access point within the first MCOT. For example, the radio access point may represent the type information of the subframe by using one bit, where "1" may be used to represent that the type of the subframe is the downlink subframe type, "0" may be used to represent that the type of the subframe is the uplink subframe type, and "111000" may be used to represent that the radio access point is to schedule six subframes within the first MCOT, where the first three subframes are downlink subframes, and the last three subframes are uplink subframes. Certainly, in another implementation, the radio access point may further generate duration information of each subframe in the bitmap manner. In this case, each subframe may be represented by using two bits, where one bit may be used to represent the type information of the subframe, and the other bit may be used to represent the duration information of the subframe. For example, if duration of subframes in the communications system may be 0.5 millisecond and 1 millisecond, "1" may be used to represent duration of 0.5 millisecond, "0" may be used to represent duration of 1 millisecond, "10" may represent that the subframe is a downlink subframe, and duration of the subframe is 1 millisecond.

Step 1002: In a process of occupying a target channel, the radio access point sends the type information and the duration information to the UE through the target channel.

The radio access point may send the foregoing type information to the UE at the beginning of the first MCOT.

Step 1003: The UE receives the type information and the duration information that are of each subframe to be scheduled by the radio access point within the first MCOT and that are sent by the radio access point.

Step 1004: The UE sends, based on the type information, the duration information, and a preset subframe offset after receiving a subframe that is separated by at least the subframe offset from a downlink subframe sent by the radio access point to the UE within the first MCOT, response information corresponding to the downlink subframe in a subframe that is scheduled by the radio access point within the first MCOT and whose type information is the uplink subframe type.

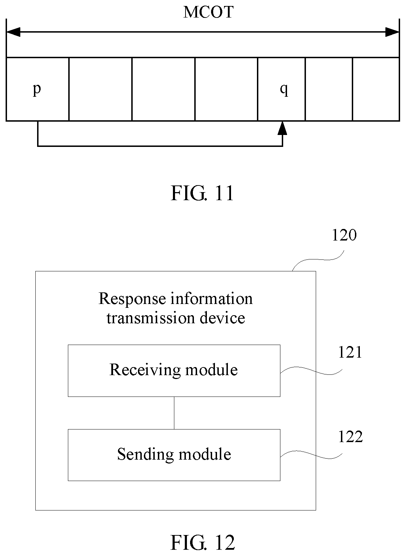

For example, if the subframe offset is 3, after receiving a downlink subframe, the UE queries type information, to obtain a type of a subframe that is separated by three subframes from the downlink subframe. If the type of the subframe is the uplink subframe type, the UE may send, in the subframe that is separated by three subframes from the downlink subframe, response information corresponding to the downlink subframe to the radio access point. As shown in FIG. 11, after receiving a downlink subframe p, the UE may send, in an uplink subframe q that is separated by three subframes from the downlink subframe p, response information corresponding to the downlink subframe p. Alternatively, if the type of the subframe is the downlink subframe type, the UE may continue to query the following type information, and send, in a subframe whose subframe type is the uplink subframe type, response information corresponding to the downlink subframe to the radio access point.

It should be noted that the UE may receive, within the first MCOT, common DCI sent by the radio access point, where the common DCI carries the foregoing preset subframe offset. Alternatively, the UE may obtain the preset subframe offset based on received higher-layer signaling, such as radio resource control (English: Radio Resource Control, RRC for short) signaling. This is not specifically limited in this application.

It should be further noted that a length of a subframe that is scheduled by the radio access point within the first MCOT and whose subframe type is the downlink subframe type is greater than or equal to a length of a subframe whose subframe type is the uplink subframe type. In different implementations, to reduce duration occupied for sending the response information, duration of a subframe whose subframe type is the uplink subframe type may be less than or equal to duration of a subframe whose subframe type is the downlink subframe type.

In conclusion, according to the response information transmission method provided in this embodiment, the radio access point may generate and send, to the UE, the type information and the duration information of each subframe to be scheduled by the radio access point within the first MCOT, and the UE may reply with the response information in the uplink subframe within the first MCOT based on the preset subframe offset, the type information, and the duration information after receiving the subframe that is separated by at least the subframe offset from the downlink subframe sent by the radio access point to the UE within the first MCOT. Therefore, when sending a downlink subframe within the first MCOT, the radio access point does not need to indicate a reply time offset of response information corresponding to the downlink subframe, so as to significantly reduce signaling overheads of the radio access point.

FIG. 12 is a block diagram of a response information transmission device 120 according to an example embodiment. The response information transmission device 120 may be UE. Referring to FIG. 12, the response information transmission device 120 includes a receiving module 121 and a sending module 122.

The receiving module 121 is configured to perform the foregoing step 403.

The sending module 122 is configured to perform the foregoing step 404.

In conclusion, the response information transmission device, namely, the UE provided in this embodiment receives a first downlink subframe that is sent by a radio access point through a target channel, where DCI included in the first downlink subframe carries first duration; and after the first duration when the first downlink subframe is received, the UE may reply with response information corresponding to n temporally consecutive downlink subframes that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

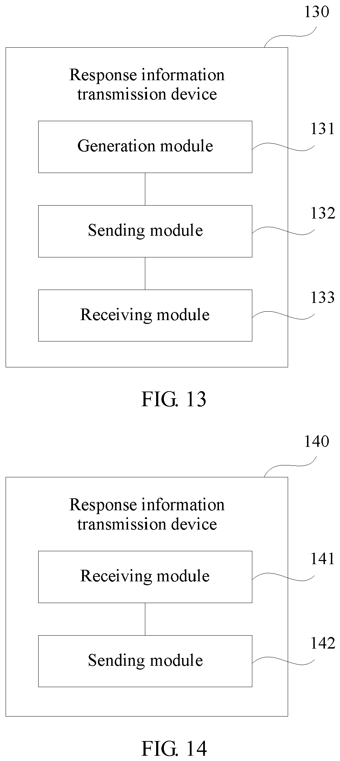

FIG. 13 is a block diagram of a response information transmission device 130 according to an example embodiment. The response information transmission device 130 may be a radio access point. Referring to FIG. 13, the response information transmission device 130 includes a generation module 131, a sending module 132, and a receiving module 133.

The generation module 131 is configured to perform the foregoing step 401.

The sending module 132 is configured to perform the foregoing step 402.

The receiving module 133 is configured to perform the foregoing step 405.

In conclusion, the response information transmission device, namely, the radio access point provided in this embodiment may send a first downlink subframe to UE through a target channel, where DCI included in the first downlink subframe carries first duration, so that after the first duration when the first downlink subframe is received, the UE may reply with response information corresponding to n temporally consecutive downlink subframes that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

FIG. 14 is a block diagram of a response information transmission device 140 according to an example embodiment. The response information transmission device 140 may be UE. Referring to FIG. 14, the response information transmission device 140 includes a receiving module 141 and a sending module 142.

The receiving module 141 is configured to perform the foregoing step 1003.

The sending module 142 is configured to perform the foregoing step 1004.

In conclusion, the response information transmission device, namely, the UE provided in this embodiment may receive type information and duration information of each subframe to be scheduled by a radio access point within a first MCOT, and reply with response information in an uplink subframe within the first MCOT based on a preset subframe offset after receiving a subframe that is separated by at least the subframe offset from a downlink subframe sent by the radio access point to the UE within the first MCOT. Therefore, when sending a downlink subframe within the first MCOT, the radio access point does not need to indicate a reply time offset of response information corresponding to the downlink subframe, so as to significantly reduce signaling overheads of the radio access point.

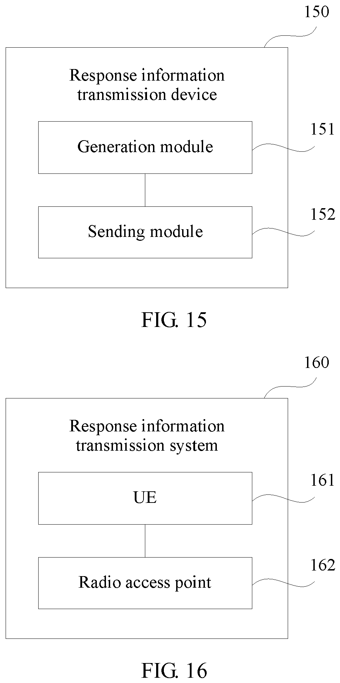

FIG. 15 is a block diagram of a response information transmission device 150 according to an example embodiment. The response information transmission device 150 may be a radio access point. Referring to FIG. 15, the response information transmission device 150 includes a generation module 151 and a sending module 152.

The generation module 151 is configured to perform the foregoing step 1001.

The sending module 152 is configured to perform the foregoing step 1002.

In conclusion, the response information transmission device, namely, the radio access point provided in this embodiment may generate and send, to UE, type information and duration information of each subframe to be scheduled by the radio access point within a first MCOT, so that the UE replies with response information in an uplink subframe within the first MCOT based on a preset subframe offset, the type information, and the duration information after receiving a subframe that is separated by at least the subframe offset from a downlink subframe sent by the radio access point to the UE within the first MCOT. Therefore, when sending a downlink subframe within the first MCOT, the radio access point does not need to indicate a reply time offset of response information corresponding to the downlink subframe, so as to significantly reduce signaling overheads of the radio access point.

It should be noted that when the response information transmission device provided in the foregoing embodiments transmits response information, only an example of division of the foregoing functional modules is used for description. In different implementations, the functions may be allocated to different functional modules for implementation as required. To be specific, an internal structure of the device is divided into different functional modules to implement all or some functions described above. In addition, the response information transmission device provided in the foregoing embodiments and the corresponding response information transmission method embodiments pertain to a same concept. For a specific implementation process of the response information transmission device, refer to the method embodiments. Details are not described herein again.

FIG. 16 is a block diagram of a response information transmission system 160 according to an example embodiment. The response information transmission system includes UE 161 and a radio access point 162.

The UE 161 is configured to perform an operation performed by UE in the embodiment shown in FIG. 4.

The radio access point 162 is configured to perform an operation performed by a radio access point in the embodiment shown in FIG. 4.

In conclusion, according to the response information transmission system provided in this embodiment, the radio access point may generate a first downlink subframe, where DCI included in the first downlink subframe carries first duration; then the radio access point may send the first downlink subframe to the UE through a target channel; and after the first duration when the first downlink subframe is received, the UE may reply with response information corresponding to n temporally consecutive downlink subframes that are instructed to be scheduled by the DCI. Therefore, when replying with response information, the UE only needs to reply with response information corresponding to a downlink subframe scheduled by the DCI, namely, the response information corresponding to the n downlink subframes, so as to significantly reduce processing complexity when the UE replies with the response information, and avoid a waste of network resources.

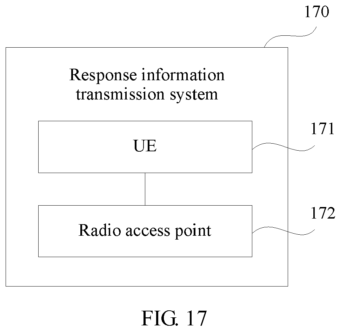

FIG. 17 is a block diagram of a response information transmission system 170 according to an example embodiment. The response information transmission system includes UE 171 and a radio access point 172.

The UE 171 is configured to perform an operation performed by UE in the embodiment shown in FIG. 10.

The radio access point 172 is configured to perform an operation performed by a radio access point in the embodiment shown in FIG. 10.

In conclusion, according to the response information transmission system provided in this embodiment, the radio access point may generate and send, to the UE, type information and duration information of each subframe to be scheduled by the radio access point within a first MCOT, and the UE may reply with response information in an uplink subframe within the first MCOT based on a preset subframe offset, the type information, and the duration information after receiving a subframe that is separated by at least the subframe offset from the downlink subframe sent by the radio access point to the UE within the first MCOT. Therefore, when sending a downlink subframe within the first MCOT, the radio access point does not need to indicate a reply time offset of response information corresponding to the downlink subframe, so as to significantly reduce signaling overheads of the radio access point.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely optional embodiments of this application, but are not intended to limit this application. Any modification, equivalent replacement, or improvement made without departing from the spirit and principle of this application should fall within the protection scope of this application.

## Claims

1. A response information transmission method, applied to user equipment UE, wherein the method comprises:
receiving a first downlink subframe sent by a radio access point through a target channel, wherein the first downlink subframe comprises downlink control signaling DCI and downlink data, the DCI carries first duration, the DCI is used to instruct to schedule n temporally consecutive downlink subframes that comprise the first downlink subframe and that are sent to the UE, and n is a positive integer greater than or equal to 1; and
sending, in m uplink subframes through the target channel after the first duration carried in the DCI comprised in the first downlink subframe, response information corresponding to the n downlink subframes to the radio access point, wherein m is a positive integer greater than or equal to 1 and less than or equal to n.

2. The method according to claim 1, wherein the first duration is an integral multiple of duration of a shortest downlink subframe in downlink subframes that can be sent by the radio access point.

3. The method according to claim 1, wherein duration of each of the m uplink subframes is less than or equal to duration of any one of the n downlink subframes.

4. The method according to claim 1, wherein m is equal to 1, and the sending, in m uplink subframes through the target channel, response information corresponding to the n downlink subframes to the radio access point comprises:
sending, in one uplink subframe through the target channel, the response information corresponding to the n downlink subframes to the radio access point.

5. The method according to claim 1, wherein m is equal to n, and the sending, in m uplink subframes through the target channel, response information corresponding to the n downlink subframes to the radio access point comprises:
sequentially sending, in n temporally consecutive uplink subframes through the target channel, the response information corresponding to the n downlink subframes to the radio access point.

6. The method according to any one of claims 1 to 5, wherein the DCI further carries listen before talk LBT instruction information, the LBT instruction information is used to instruct the UE to perform a long LBT operation, a short LBT operation, or no LBT operation, and the sending, in m uplink subframes through the target channel, response information corresponding to the n downlink subframes to the radio access point comprises:
performing an LBT operation based on the LBT instruction information carried in the DCI; and
sending, in the m uplink subframes through the target channel after the UE accesses the target channel by using the LBT operation, the response information corresponding to the n downlink subframes to the radio access point.

7. A response information transmission method, applied to a radio access point, wherein the method comprises:
generating a first downlink subframe, wherein the first downlink subframe comprises downlink control DCI and downlink data, the DCI carries first duration, the DCI is used to instruct to schedule n temporally consecutive downlink subframes that comprise the first downlink subframe and that are sent to user equipment UE, and n is a positive integer greater than or equal to 1;
in a process of occupying a target channel, sending the first downlink subframe to the UE through the target channel, so that the UE sends, in m uplink subframes through the target channel after the first duration carried in the DCI comprised in the first downlink subframe when the first downlink subframe is received, response information corresponding to the n downlink subframes to the radio access point, wherein m is a positive integer greater than or equal to 1 and less than or equal to n; and
receiving, in the m uplink subframes, the response information corresponding to the n downlink subframes sent by the UE.

8. The method according to claim 7, wherein the first duration is an integral multiple of duration of a shortest downlink subframe in downlink subframes that can be sent by the radio access point.

9. The method according to claim 7, wherein duration of each of the m uplink subframes is less than or equal to duration of any one of the n downlink subframes.

10. The method according to claim 7, wherein m is equal to 1, and the receiving, in the m uplink subframes, the response information corresponding to the n downlink subframes sent by the UE comprises:
receiving, in one uplink subframe, the response information corresponding to the n downlink subframes sent by the UE.

11. The method according to claim 7, wherein m is equal to n, and the receiving, in the m uplink subframes, the response information corresponding to the n downlink subframes sent by the UE comprises:
sequentially receiving, in n temporally consecutive uplink subframes, the response information corresponding to the n downlink subframes sent by the UE.

12. The method according to any one of claims 7 to 11, wherein the generating a first downlink subframe comprises:
determining, within a maximum channel occupancy time MCOT for which the radio access point currently occupies the target channel, a sending moment at which the radio access point is to send the first downlink subframe;
determining, based on the sending moment, the first duration, and duration of the MCOT, whether a moment at which the UE sends the corresponding information through the target channel is in the MCOT;
when it is determined that the moment at which the UE sends the corresponding information through the target channel is in the MCOT, generating a first downlink subframe that comprises first DCI or generating a first downlink subframe that comprises second DCI, wherein the first DCI carries LBT instruction information that is used to instruct the UE to perform a short listen before talk LBT operation, and the second DCI carries LBT instruction information that is used to instruct the UE to perform no LBT operation; and
when it is determined that the moment at which the UE sends the corresponding information through the target channel is outside the MCOT, generating a first downlink subframe that comprises third DCI, wherein the third DCI carries LBT instruction information that is used to instruct the UE to perform a long LBT operation.

13. A response information transmission device, wherein the device comprises a processor, a receiver, and a transmitter that are connected by using a bus;
the receiver is configured to receive a first downlink subframe sent by a radio access point through a target channel, wherein the first downlink subframe comprises downlink control signaling DCI and downlink data, the DCI carries first duration, the DCI is used to instruct to schedule n temporally consecutive downlink subframes that comprise the first downlink subframe and that are sent to user equipment UE, and n is a positive integer greater than or equal to 1; and
the processor is configured to control the transmitter to send, in m uplink subframes through the target channel after the first duration carried in the DCI comprised in the first downlink subframe, response information corresponding to the n downlink subframes to the radio access point, wherein m is a positive integer greater than or equal to 1 and less than or equal to n.

14. The device according to claim 13, wherein the first duration is an integral multiple of duration of a shortest downlink subframe in downlink subframes that can be sent by the radio access point.

15. The device according to claim 13, wherein duration of each of the m uplink subframes is less than or equal to duration of any one of the n downlink subframes.

16. The device according to claim 13, wherein m is equal to 1, and the processor is configured to control the transmitter to:
send, in one uplink subframe through the target channel after the first duration carried in the DCI comprised in the first downlink subframe, the response information corresponding to the n downlink subframes to the radio access point.

17. The device according to claim 13, wherein m is equal to n, and the processor is configured to control the transmitter to:
sequentially send, in n temporally consecutive uplink subframes through the target channel after the first duration carried in the DCI comprised in the first downlink subframe, the response information corresponding to the n downlink subframes to the radio access point.

18. The device according to any one of claims 13 to 17, wherein the DCI further carries listen before talk LBT instruction information, the LBT instruction information is used to instruct the UE to perform a long LBT operation, a short LBT operation, or no LBT operation, and the processor is configured to control the transmitter to:
perform, after the first duration carried in the DCI comprised in the first downlink subframe, an LBT operation based on the LBT instruction information carried in the DCI; and
send, in the m uplink subframes through the target channel after the transmitter accesses the target channel by using the LBT operation, the response information corresponding to the n downlink subframes to the radio access point.

19. A response information transmission device, wherein the device comprises a processor, a transmitter, and a receiver that are connected by using a bus;
the processor is configured to generate a first downlink subframe, wherein the first downlink subframe comprises downlink control signaling DCI and downlink data, the DCI carries first duration, the DCI is used to instruct to schedule n temporally consecutive downlink subframes that comprise the first downlink subframe and that are sent to user equipment UE, and n is a positive integer greater than or equal to 1;
the processor is configured to control the transmitter to: in a process of occupying a target channel, send the first downlink subframe to the UE through the target channel, so that the UE sends, in m uplink subframes through the target channel after the first duration carried in the DCI comprised in the first downlink subframe when the first downlink subframe is received, response information corresponding to the n downlink subframes to the radio access point, wherein m is a positive integer greater than or equal to 1 and less than or equal to n; and
the processor is configured to control the receiver to receive, in the m uplink subframes, the response information corresponding to the n downlink subframes sent by the UE.

20. The device according to claim 19, wherein the first duration is an integral multiple of duration of a shortest downlink subframe in downlink subframes that can be sent by the radio access point.

21. The device according to claim 19, wherein duration of each of the m uplink subframes is less than or equal to duration of any one of the n downlink subframes.

22. The device according to claim 19, wherein m is equal to 1, and the receiving module is configured to:
receive, in one uplink subframe, the response information corresponding to the n downlink subframes sent by the UE.

23. The device according to claim 19, wherein m is equal to n, and the receiving module is configured to:
sequentially receive, in n temporally consecutive uplink subframes, the response information corresponding to the n downlink subframes sent by the UE.

24. The device according to any one of claims 19 to 23, wherein the generation module is configured to:
determine, within a maximum channel occupancy time MCOT for which the radio access point currently occupies the target channel, a sending moment at which the radio access point is to send the first downlink subframe;
determine, based on the sending moment, the first duration, and duration of the MCOT, whether a moment at which the UE sends the corresponding information through the target channel is in the MCOT;
when it is determined that the moment at which the UE sends the corresponding information through the target channel is in the MCOT, generate a first downlink subframe that comprises first DCI or generate a first downlink subframe that comprises second DCI, wherein the first DCI carries LBT instruction information that is used to instruct the UE to perform a short listen before talk LBT operation, and the second DCI carries LBT instruction information that is used to instruct the UE to perform no LBT operation; and
when it is determined that the moment at which the UE sends the corresponding information through the target channel is outside the MCOT, generate a first downlink subframe that comprises third DCI, wherein the third DCI carries LBT instruction information that is used to instruct the UE to perform a long LBT operation.

25. A response information transmission system, wherein the transmission system comprises the user equipment UE according to any one of claims 13 to 18 and the radio access point according to any one of claims 19 to 24.

26. A computer readable storage medium, comprising an instruction, wherein when the instruction runs on a computer, the computer performs the method according to any one of claims 1 to 6.

27. A computer program product that comprises an instruction, wherein when the instruction runs on a computer, the computer performs the method according to any one of claims 1 to 6.

28. A computer readable storage medium, comprising an instruction, wherein when the instruction runs on a computer, the computer performs the method according to any one of claims 7 to 12.

29. A computer program product that comprises an instruction, wherein when the instruction runs on a computer, the computer performs the method according to any one of claims 7 to 12.
